# EUROPEAN PATENT APPLICATION

(11) **EP 4 572 083 A1**
(43) Date of publication of application: **18.06.2025**
(21) Application number: 24194877.7
(22) Date of filing: 16.08.2024
(51) Int. Cl.: H02J 7/00

(54) **BATTERY PACK**

(30) Priority: 11.12.2023 KR 20230178671
(71) Applicant: SAMSUNG SDI CO., LTD., Giheung-gu Yongin-si, Gyeonggi-do 17084 (KR)
(72) Inventor: Jin, Kyong Pil, 17084 Yongin-si, Gyeonggi-do (KR); Kim, Ha Neul, 17084 Yongin-si, Gyeonggi-do (KR); Jeong, Yong Jun, 17084 Yongin-si, Gyeonggi-do (KR)
(74) Representative: Gulde & Partner

(57) **Abstract**

The present disclosure relates to a battery pack (100), and the technical problem to be solved is to provide a battery pack in which a charger can directly supply power to a battery control circuit (140) that controls the charging and discharging of a battery cell and/or an LED display (160) that displays the amount of charge when the battery cell is coupled to the charger, thereby preventing the degradation of the battery cell and minimizing the current consumption of the battery cell. To this end, the present disclosure provides a battery pack (100) which includes: a charge switch (120) coupled between a battery cell positive terminal and a charger positive terminal (113) and between a pack positive terminal (114) and the charger positive terminal (113); a discharge switch (130) coupled between a battery cell negative terminal and a pack negative terminal (116) and between a charger negative terminal (117) and the pack negative terminal (116); a battery control circuit (140) configured to control the charge switch (120) and the discharge switch (130); and a power supply circuit (150) coupled between the charger positive terminal (113) and the battery control circuit (140), wherein the power supply circuit (150) directly supplies power to the battery control circuit (140) when a battery cell is coupled to a charger.

## Description

### BACKGROUND

### 1. Field

The present disclosure relates to a battery pack.

### 2. Description of the Related Art

Secondary batteries are batteries which can be charged and discharged, unlike primary batteries which cannot be recharged. Low-capacity secondary batteries are used in small, portable electronic devices such as smartphones, tablet computers, laptop computers, and cleaners, while high-capacity secondary batteries are widely used as power sources for driving motors and power storage batteries in hybrid vehicles and electric vehicles. In general, secondary batteries are also referred to as battery cells.

The above information disclosed in this background section is only for enhancement of understanding of the background of the present invention and therefore may include information that does not constitute the related art.

### SUMMARY

The present disclosure provides a battery pack in which a charger directly supplies power to a battery control circuit that controls the charging and discharging of a battery cell and/or a light-emitting diode (LED) display that displays the amount of charge when the battery cell is coupled to the charger, thereby preventing the degradation of the battery cell and minimizing the current consumption of the battery cell.

An exemplary battery pack according to the present disclosure may include: a charge switch coupled between a battery cell positive terminal and a charger positive terminal and between a pack positive terminal and the charger positive terminal; a discharge switch coupled between a battery cell negative terminal and a pack negative terminal and between a charger negative terminal and the pack negative terminal; a battery control circuit configured to control the charge switch and the discharge switch; and a power supply circuit coupled between the charger positive terminal and the battery control circuit, wherein the power supply circuit directly supplies power to the battery control circuit when a battery cell is coupled to a charger.

The battery pack may further include an LED display configured to display the amount of charge of the battery cell in response to a control signal of the battery control circuit, wherein the power supply circuit may directly supply power to the LED display when the battery cell is coupled to the charger.

The battery pack may further include a discharge switch driving driver configured to drive the discharge switch in response to a control signal of the battery control circuit, wherein the power supply circuit may directly supply power to the discharge switch driving driver when the battery cell is coupled to the charger.

The power supply circuit may include: a voltage maintaining diode of which an anode may be coupled to the charger positive terminal and a cathode may be coupled to the charge switch so that a voltage of the charger is higher than a voltage of the battery cell; a charger-side diode of which an anode may be coupled to the charger positive terminal and a cathode may be coupled to the battery control circuit; and a battery-side diode of which an anode may be coupled to the battery cell positive terminal and a cathode may be coupled to the battery control circuit.

An output voltage of the charger-side diode may be higher than an output voltage of the battery-side diode.

The battery pack may further include a regulator of which an input terminal may be coupled to the cathode of the charger-side diode and the cathode of the battery-side diode, wherein the battery control circuit may be configured to receive power from an output terminal of the regulator.

The battery pack may further include: a regulator of which an input terminal may be coupled to the cathode of the charger-side diode and the cathode of the battery-side diode; and an LED display configured to display the amount of charge of the battery cell in response to a control signal of the battery control circuit, wherein the LED display may be configured to receive power from an output terminal of the regulator.

The battery pack may further include: a regulator of which an input terminal is coupled to the cathode of the charger-side diode and the cathode of the battery-side diode; and a discharge switch driving driver configured to drive the discharge switch in response to a control signal of the battery control circuit, wherein the discharge switch driving driver may be configured to receive power from an output terminal of the regulator.

The charge switch may be directly driven in response to a control signal of the battery control circuit.

According to a further aspect of the present disclosure, an exemplary battery pack includes: a charge switch coupled between a battery cell positive terminal and a charger positive terminal and between a pack positive terminal and the charger positive terminal; a discharge switch coupled between a battery cell negative terminal and a pack negative terminal and between a charger negative terminal and the pack negative terminal; a battery control circuit configured to control the charge switch and the discharge switch; an LED display configured to display the amount of charge of a battery cell in response to a control signal of the battery control circuit; and a power supply circuit coupled between the charger positive terminal and the LED display, wherein the power supply circuit may directly supply power to the LED display when the battery cell is coupled to a charger.

The battery pack may further include a discharge switch driving driver configured to drive the discharge switch in response to a control signal of the battery control circuit, and the power supply circuit may directly supply power to the discharge switch driving driver when the battery cell is coupled to the charger.

The power supply circuit may include: a voltage maintaining diode of which an anode may be coupled to the charger positive terminal and a cathode may be coupled to the charge switch so that a voltage of the charger is higher than a voltage of the battery cell; a charger-side diode of which an anode may be coupled to the charger positive terminal and a cathode may be coupled to the LED display; and a battery-side diode of which an anode may be coupled to the battery cell positive terminal and a cathode may be coupled to the LED display.

An output voltage of the charger-side diode may be higher than an output voltage of the battery-side diode.

The battery pack may further include a regulator of which an input terminal may be coupled to the cathode of the charger-side diode and the cathode of the battery-side diode, and the LED display may be configured to receive power from an output terminal of the regulator.

The battery pack may further include: a regulator of which an input terminal may be coupled to the cathode of the charger-side diode and the cathode of the battery-side diode; and a discharge switch driving driver configured to drive the discharge switch in response to a control signal of the battery control circuit, and the discharge switch driving driver may be configured to receive power from an output terminal of the regulator.

### BRIEF DESCRIPTION OF DRAWINGS

Features will become apparent to those of ordinary skill in the art by describing in detail exemplary embodiments with reference to the attached drawings in which:
FIG. 1 is a block diagram illustrating a configuration of an exemplary battery pack according to the present disclosure.
FIG. 2 is a block diagram illustrating the main components of an exemplary battery pack according to the present disclosure.
FIG. 3 is a block diagram illustrating a configuration of an exemplary battery pack according to the present disclosure.
FIG. 4 is a block diagram illustrating the main components of an exemplary battery pack according to the present disclosure.

### DETAILED DESCRIPTION

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The embodiments of the present disclosure are provided to more completely explain the present disclosure to those skilled in the art, the following embodiments may be modified into various other forms, and the scope of the present disclosure not limited to the following embodiments.

As used herein, the term "and/or" includes any and all combinations of one or more of the listed items. Further, the meaning of " being coupled" in the present specification refers to not only a case in which member A and member B are directly coupled, but also a case in which member C is interposed between member A and member B to indirectly connect member A and member B.

Terminology used herein is for the purpose of describing particular embodiments only and is not intended to be limiting of the disclosure. As used herein, the singular forms are intended to include the plural forms as well, unless the context clearly indicates otherwise. Further, when used in the present specification, the terms "comprise or include" and/or "comprising or including" specify the presence of mentioned features, numbers, steps, operations, members, elements and/or groups thereof, and do not exclude the presence or addition of one or more other features, numbers, steps, operations, members, elements and/or groups.

Although the terms first, second, and the like are used in the present specification to describe various members, components, regions, layers and/or parts, it is clear that these members, components, regions, layers and/or parts should not be limited by these terms. These terms are used only to distinguish one member, component, region, layer, or part from another member, component, region, layer, or part. Accordingly, a first member, component, region, layer, or part to be described later may refer to a second member, component, region, layer, or part without departing from teachings of the present disclosure.

In addition, a control circuit (controller) and/or other related devices or parts according to the present disclosure may be implemented using arbitrary appropriate hardware, firmware (e.g., an application specific integrated circuit), software, or an appropriate combination of software, firmware and hardware. For example, the various components of the control circuit (controller) and/or other related devices or parts according to the present disclosure may be formed on one integrated circuit chip or on separate integrated circuit chips. In addition, the various components of the control circuit (controller) may be implemented on a flexible printed circuit film and may be formed on a tape carrier package, a printed circuit board, or the same substrate as the control circuit (controller). In addition, the various components of the control circuit (controller) may be a process or thread running on one or more processors in one or more computing devices, which may execute computer program instructions and interact with other components to perform various functions to be mentioned below. The computer program instructions are stored in a memory that can be executed on a computing device using a standard memory device, such as a random access memory. The computer program instructions may also be stored in other non-transitory computer readable media, such as CD-ROMs or flash drives and the like. Furthermore, those skilled in the art will understand that functions of various computing devices may be combined or integrated into one computing device, or functions of a particular computing device may be distributed to one or more other computing devices without departing from embodiments of the present disclosure.

In general, battery packs applied to cleaners, power tools, or electric bikes usually have a light-emitting diode (LED) display to indicate a state of charge (SOC).

Such LED displays are typically implemented with approximately 3 to 5 LEDs, each of which is turned on sequentially depending on the SOC when charging, and all LEDs are turned on when fully charged. Even after fully charging, the charger is often continuously coupled, although it depends on the user, and especially in the case of a cleaner, which is usually placed on a cleaner station (stand), the charger is continuously coupled. Due to the continuous turn-on of the LED display, the current consumption occurs in the battery itself, and eventually the battery is repeatedly discharged and recharged at regular intervals, even when the cleaner is not used. This may cause the battery cell to deteriorate even when the user does not use the cleaner, and the lifetime of the battery cell itself may be also decreased.

To solve this problem, some applications apply a method of turning off the LED display when the cleaner is fully charged. However, if this method is applied, the user does not immediately know the state of charge even though the cleaner is coupled to the charger and the user may know the state of charge of the battery only by manipulating the cleaner or the charger.

In addition, if the current consumption of the circuit components of a battery monitoring system (BMS) as well as the LED display is high, the battery cell is continuously and repeatedly charged and discharged when the battery cell is continuously coupled to the charger as described above. In this way, cell degradation may accelerate as the battery cell is repeatedly charged and discharged even when the charger is coupled. Therefore, it is desirable to minimize the current consumption of the battery when the charger is coupled to a set.

The present disclosure provides a battery pack capable of minimizing the current consumption of the BMS that controls the battery pack and/or the current consumption of the LED display that displays the SOC when the battery pack is continuously coupled to the charger after the battery cell is fully charged, even when the set is not used.

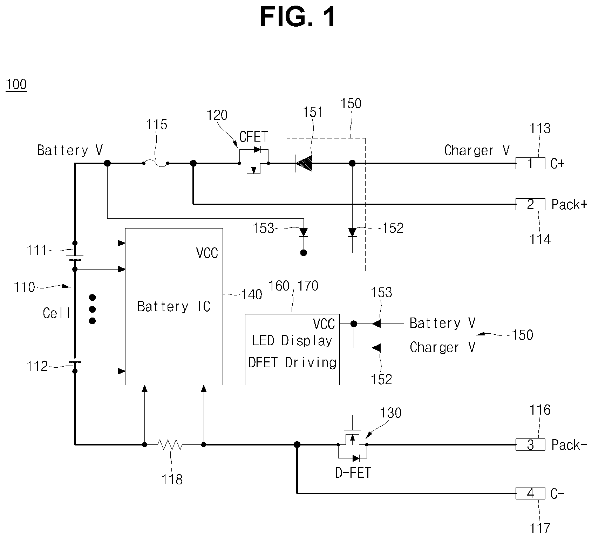

FIG. 1 is a block diagram illustrating a configuration of an exemplary battery pack 100 according to the present disclosure. As shown in FIG. 1, the exemplary battery pack 100 according to embodiments of the present disclosure may include a battery cell 110, a charge switch 120, a discharge switch 130, a battery control circuit 140, and a power supply circuit 150. The exemplary battery pack 100 according to the present disclosure may further include an LED display 160. The exemplary battery pack 100 according to the present disclosure may further include a discharge switch driving driver 170.

The battery cell 110 may include a rechargeable lithium-ion battery, a lithium polymer battery, or a solid-state battery. Further, the battery cell 110 may include a prismatic battery, a cylindrical battery, or a pouch-type battery. In some examples, a plurality of battery cells 110 may be coupled or connected in series and/or parallel to be utilized as a DC power source having an output voltage of tens to hundreds of volts. The battery cell 110 may include a battery cell positive terminal 111 and a battery cell negative terminal 112.

The charge switch 120 may include or be referred to as a metal oxide semiconductor field effect transistor (MOSFET) or an insulated gate bipolar transistor (IGBT). In some examples, the charge switch 120 may include a gate electrode, a source electrode, and a drain electrode. In some examples, the gate electrode of the charge switch 120 may directly receive a control signal of the battery control circuit 140. To this end, the gate electrode of the charge switch 120 may be electrically coupled or connected to the battery control circuit 140. In some examples, the source electrode of the charge switch 120 may be coupled or connected to the battery cell positive terminal 111. In some examples, the drain electrode of the charge switch 120 may be coupled or connected to a charger positive terminal 113. In some examples, a body diode may be coupled or connected in a forward direction from the source electrode toward the drain electrode. In some examples, a pack positive terminal 114 may be coupled or connected between the battery cell positive terminal 111 and the source electrode of the charge switch 120. In some examples, a fuse 115 may be further coupled or connected between the source electrode of the charge switch 120 and the battery cell positive terminal 111.

The discharge switch 130 may include or be referred to as a MOSFET or IGBT. In some examples, the discharge switch 130 may include a gate electrode, a source electrode, and a drain electrode. In some examples, the gate electrode of the discharge switch 130 may be directly or indirectly receive a control signal from the battery control circuit 140. To this end, the gate electrode of the discharge switch 130 may be electrically coupled or connected to the battery control circuit 140. In some examples, the source electrode of the discharge switch 130 may be coupled or connected to the battery cell negative terminal 112. In some examples, the drain electrode of the discharge switch 130 may be coupled or connected to a pack negative terminal 116. In some examples, a body diode may be coupled or connected in a forward direction from the source electrode toward the drain electrode. In some examples, a charger negative terminal 117 may be coupled or connected between the battery cell negative terminal 112 and the source electrode of the discharge switch 130. In some examples, a sense resistor 118 may be further coupled or connected between the source electrode of the discharge switch 130 and the battery cell negative terminal 112.

The battery control circuit 140 may include or be referred to as an integrated circuit. The integrated circuit may include a processor and a memory operatively coupled thereto, and the memory may have program code installed therein to perform battery pack protection operations. The battery control circuit 140 may sense a voltage (i.e., a charge voltage or discharge voltage) of the battery cell 110 by being coupled or connected to the battery cell positive terminal 111 and the battery cell negative terminal 112 via sensing wires. The battery control circuit 140 may sense a current (i.e., a charge current or a discharge current) of the battery cell 110 by being coupled or connected to both ends of the sense resistor 118 via sensing wires.

In some examples, when the battery pack 100 is coupled or connected to the charger, the battery control circuit 140 may be configured to charge the battery pack 100 (i.e., the battery cells 110) from the charger by controlling the charge switch 120 to turn on and the discharge switch 130 to turn off. In some examples, connecting the battery pack 100 to the charger may mean that the battery cell positive terminal 111 is coupled or connected to the charger positive terminal 113 via the charge switch 120 and the battery cell negative terminal 112 is coupled or connected to the charger negative terminal 117. In some embodiments, a charging current may flow through the charger positive terminal 113, the charge switch 120, the fuse 115, the battery cell positive terminal 111, the battery cell negative terminal 112, the sense resistor 118, and the charger negative terminal 117. In some embodiments, the battery control circuit 140 may control the charge switch 120 to turn off when the charging voltage of the battery pack 100 is higher than a reference voltage, thereby preventing overcharging of the battery pack 100.

In some examples, when the battery pack 100 is coupled or connected to a set (e.g., a cleaner), the battery control circuit 140 may be configured to control the charge switch 120 to turn off and the discharge switch 130 to turn on so that power of the battery pack 100 is discharged to the set. In some embodiments, connecting the battery pack 100 to the set may mean that the battery cell positive terminal 111 is coupled or connected to the pack positive terminal 114 and the battery cell negative terminal 112 is coupled or connected to the pack negative terminal 116 via the discharge switch 130. In some embodiments, discharge current may flow through the battery cell positive terminal 111, the fuse 115, the pack positive terminal 114, the set, the pack negative terminal 116, the discharge switch 130, the sense resistor 118, and the battery cell negative terminal 112. In some examples, the battery control circuit 140 may control the discharge switch 130 to turn off when the discharge voltage of the battery pack 100 is lower than a reference voltage, thereby preventing over discharging of the battery pack 100.

In some embodiments, the battery control circuit 140 may control the charge switch 120 and/or the discharge switch 130 to turn off when the charge current and/or the discharge current of the battery pack 100 is higher than a reference value, thereby preventing overcurrent of the battery pack 100.

The power supply circuit 150 may include a voltage maintaining diode 151, a charger-side diode 152, and a battery-side diode 153. The voltage maintaining diode 151 may have an anode coupled or connected to the charger positive terminal 113 and a cathode coupled or connected to the drain electrode of the charge switch 120. Such a voltage maintaining diode 151 may ensure that the voltage of the charger is always higher than the voltage of the battery cell 110. In some examples, the fully charged voltage of the battery cell 110 is approximately 29.12 V and the voltage of the charger is approximately 29.76 V and thus the voltage of the charger may be approximately 0.64 V higher than the voltage of the battery cell 110. The charger-side diode 152 may have an anode coupled or connected between the charger positive terminal 113 and the drain electrode of the charge switch 120, and a cathode coupled or connected to the battery control circuit 140. The battery-side diode 153 may have an anode coupled or connected between the battery cell positive terminal 111 and the source electrode of the charge switch 120, and a cathode coupled or connected to the battery control circuit 140. Meanwhile, as described above, it can be seen that as the charger-side diode 152 and the battery-side diode 153 are coupled or connected in parallel with each other and the output voltage of the charger-side diode 152 is higher than the output voltage of the battery-side diode 153, the output voltage of the charger-side diode 152, rather than the output voltage of the battery-side diode 153, is provided as a power supply voltage when the battery pack 100 is coupled or connected to the charger.

In some embodiments, when the battery pack 100 (i.e., battery cells 110) is connected to a charger, the battery control circuit 140 may receive power through the charger-side diode 152. In some embodiments, when the battery pack 100 (i.e., the battery cells 110) is disconnected from the charger, the battery control circuit 140 may receive power through the battery-side diode 153.

In some embodiments, the LED display 160 may display the amount of charge (e.g., SOC) of the battery cell 110 in response to a control signal of the battery control circuit 140. To this end, the LED display 160 may be coupled or connected to the battery control circuit 140. In some examples, the LED display 160 may allow one LED to turn on when the amount of charge is about 30%, two LEDs to turn on when the amount of charge is about 60%, and three LEDs to turn on when the amount of charge is about 100%. In some examples, the power supply circuit 150 may also be coupled or connected to the LED display 160. Thus, when the battery pack 100 is connected to the charger, the LED display 160 may receive power through the charger-side diode 152. In some embodiments, when the battery pack 100 is disconnected from the charger, the LED display 160 may receive power through the battery-side diode 153.

In some embodiments, the discharge switch driving driver 170 may drive (i.e., turn on or turn off) the discharge switch 130 in response to a control signal of the battery control circuit 140. To this end, the discharge switch driving driver 170 may be coupled or connected to the battery control circuit 140. In some examples, the power supply circuit 150 may also be coupled or connected to the discharge switch driving driver 170. Thus, when the battery pack 100 is connected to the charger, the discharge switch driving driver 170 may receive power through the charger-side diode 152. In some embodiments, when the battery pack 100 is disconnected from the charger, the discharge switch driving driver 170 may receive power through the battery-side diode 153.

In some embodiments, unlike the discharge switch 130, the charge switch 120 may be directly driven (i.e., turned on or turned off) in response to a control signal of the battery control circuit 140. Thus, a charge switch driving driver may not be present between the charge switch 120 and the battery control circuit 140.

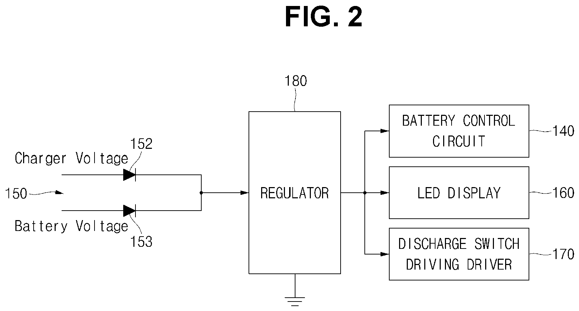

FIG. 2 is a block diagram illustrating the main components of an exemplary battery pack 100 according to the present disclosure. As shown in FIG. 2, the exemplary battery pack 100 according to the present disclosure may further include a regulator 180. The regulator 180 may include an input terminal, an output terminal, and a ground terminal, and may output a stable second DC voltage (e.g., about 12 V) via the output terminal when a first DC voltage (e.g., about 29.76 V) is input to the input terminal.

In some embodiments, the input terminal of the regulator 180 may be coupled to the cathode of the charger-side diode 152 and the cathode of the battery-side diode 153. In some embodiments, the battery control circuit 140 may be configured to receive power from the output terminal of the regulator 180. In some embodiments, the LED display 160 may be configured to receive power from the output terminal of the regulator 180. In some embodiments, the discharge switch driving driver 170 may be configured to receive power from the output terminal of the regulator 180.

Table 1 shows a comparison of an example of current consumption before and after application of one or more embodiments of the present invention.

**[Table 1]**

| | Before application of embodiment(s) of the present disclosure | | | | After application of embodiment(s) of the present disclosure | | | |
|---|---|---|---|---|---|---|---|---|
| | Control circuit | Regulator (180) | LED(Full Charge) | Total | Control circuit | Regulator (180) | LED(Full Charge) | Total |
| Battery-side current consumption | 0.7 mA | 4.7 mA | 1 mA | 6.4 mA | | | | |
| Charger-side current consumption | | | | | 0.7 mA | 4.7 mA | 1 mA | 6.4 mA |

As shown in Table 1, before the application of embodiments of the present invention, the battery-side current consumption was approximately 6.4 mA and the charger-side current consumption was approximately 0 mA, but after the application of the present invention, the charger-side current consumption was approximately 6.4 mA and the battery-side current consumption was 0 mA. Therefore, in the present invention, when the battery pack 100 is coupled to the charger, since the battery cell 110 consumes almost no current, the degradation phenomenon caused by repeated charging and discharging of the battery cell 110 can be prevented.

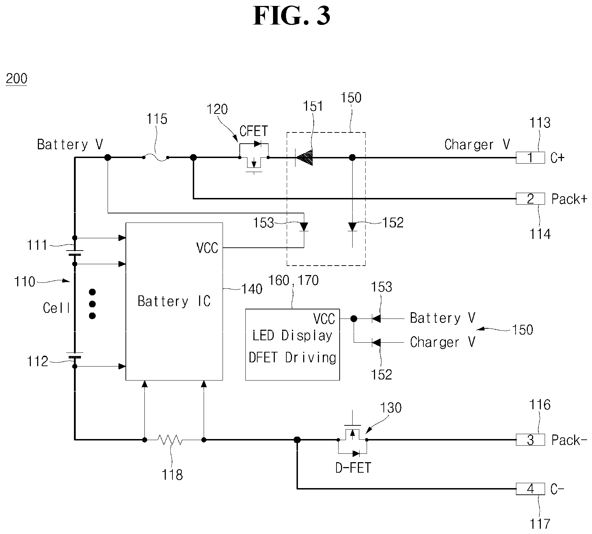

FIG. 3 is a block diagram illustrating a configuration of an exemplary battery pack 200 according to the present disclosure. The battery pack 200 shown in FIG. 3 may be similar to the battery pack 100 shown in FIG. 1, except that the battery control circuit 140 receives power only from the battery side.

As shown in FIG. 3, the exemplary battery pack 200 according to the present disclosure may include a battery cell 110, a charge switch 120, a discharge switch 130, a battery control circuit 140, and a power supply circuit 150. The exemplary battery pack 200 according to the present disclosure may further include an LED display 160. The exemplary battery pack 200 according to the present disclosure may further include a discharge switch driving driver 170.

The power supply circuit 150 may include a voltage maintaining diode 151, a charger-side diode 152, and a battery-side diode 153. The voltage maintaining diode 151 may have an anode coupled to a charger positive terminal 113 and a cathode coupled to a drain electrode of the charge switch 120. Such a voltage maintaining diode 151 may ensure that the voltage of the charger is always higher than the voltage of the battery cell 110. The charger-side diode 152 may have an anode coupled between the charger positive terminal 113 and the drain electrode of the charge switch 120, and a cathode coupled to the LED display 160 and/or the discharge switch driving driver 170. The battery-side diode 153 may have an anode coupled between a battery cell positive terminal 111 and a source electrode of the charge switch 120, and a cathode may be coupled to the battery control circuit 140.

As the charger-side diode 152 and the battery-side diode 153 are coupled in parallel and coupled to the LED display 160 and/or the discharge switch driving driver 170, the charger-side diode 152 having a relatively high output voltage may supply power to the LED display 160 and/or the discharge switch driving driver 170. Additionally, the battery-side diode 153 may supply power to the battery control circuit 140.

In this way, if the battery pack 200 (i.e., the battery cells 110) is connected to the charger, the LED display 160 and/or the discharge switch driving driver 170 may receive power through the charger-side diode 152. When the battery pack 200 (i.e., the battery cells 110) is disconnected from the charger, the LED display 160 and/or the discharge switch driving driver 170 may receive power through the battery-side diode 153. Meanwhile, regardless of whether the battery pack 200 (i.e., the battery cells 110) is connected to or disconnected from the charger, the battery control circuit 140 may always receive power through the battery-side diode 153.

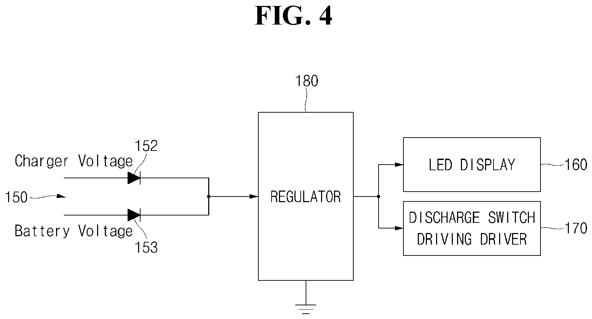

FIG. 4 is a block diagram illustrating the main components of an exemplary battery pack 200 according to embodiments of the present disclosure. As shown in FIG. 4, the power supply circuit 150 may supply power to the LED display 160 and/or the discharge switch driving driver 170 via a regulator 180. The LED display 160 and/or the discharge switch driving driver 170 may receive power through the charger-side diode 152 or the battery-side diode 153 via the regulator 180. In some embodiments, the battery control circuit 140 may receive power through the battery-side diode 153.

In this way, the battery control circuit 140 may consistently receive power through the battery-side diode 153 when the battery pack 200 is connected to or disconnected from the charger, and the LED display 160 and/or the discharge switch driving driver 170 may receive power through the charger-side diode 152 when the battery pack 200 is connected to the charger and may receive power through the battery-side diode 153 when the battery pack 200 is disconnected from the charger.

Embodiments of the present disclosure provide a battery pack in which a charger directly supplies power to a battery control circuit that controls the charging and discharging of a battery cell and/or a light-emitting diode (LED) display that displays the amount of charge when the battery cell is coupled to the charger, thereby preventing the degradation of the battery cell and minimizing the current consumption of the battery cell.

Embodiments of the present disclosure can also provide a battery pack in which a charger can directly supply power to a battery control circuit that controls the charging and discharging of a battery cell and/or an LED display that displays the amount of charge when the battery cell is connected to the charger, thereby preventing the degradation of the battery cell and minimizing the current consumption of the battery cell.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of ordinary skill in the art that various changes in form and details may be made without departing from the scope of the present invention as set forth in the following claims.

## Claims

1. A battery pack (100) comprising:
a charge switch (120) coupled between a battery cell positive terminal (111) and a charger positive terminal (113) and between a pack positive terminal (114) and the charger positive terminal (113);
a discharge switch (130) coupled between a battery cell negative terminal (112) and a pack negative terminal (116) and between a charger negative terminal (117) and the pack negative terminal (116);
a battery control circuit (140) configured to control the charge switch (120) and the discharge switch (130); and
a power supply circuit (150) coupled between the charger positive terminal (113) and the battery control circuit (140),
wherein the power supply circuit (150) is configured to directly supply power to the battery control circuit (140) when a battery cell (110) is coupled to a charger.

2. The battery pack (100) of claim 1, further comprising a light-emitting diode, LED, display (160) configured to display an amount of charge of the battery cell (110) in response to a control signal of the battery control circuit (140),
wherein the power supply circuit (150) is configured to directly supply power to the LED display (160) when the battery cell (110) is coupled to the charger.

3. The battery pack (100) of claim 1 or 2, further comprising a discharge switch driving driver (170) configured to drive the discharge switch (130) in response to a control signal of the battery control circuit (140),
wherein the power supply circuit (150) is configured to directly supply power to the discharge switch driving driver (170) when the battery cell (110) is coupled to the charger.

4. The battery pack (100) of one of the preceding claims, wherein the power supply circuit (150) comprises:
a voltage maintaining diode (151) of which an anode is coupled to the charger positive terminal (113) and a cathode is coupled to the charge switch (120) so that a voltage of the charger is higher than a voltage of the battery cell (110);
a charger-side diode (152) of which an anode is coupled to the charger positive terminal (113) and a cathode is coupled to the battery control circuit (140); and
a battery-side diode (153) of which an anode is coupled to the battery cell positive terminal (111) and a cathode is coupled to the battery control circuit (140).

5. The battery pack (100) of claim 4, wherein an output voltage of the charger-side diode (152) is higher than an output voltage of the battery-side diode (153).

6. The battery pack (100) of claim 4 or 5, further comprising a regulator (180) of which an input terminal is coupled to the cathode of the charger-side diode (152) and the cathode of the battery-side diode (153),
wherein the battery control circuit (140) is configured to receive power from an output terminal of the regulator (180).

7. The battery pack (100) of claim 4 or 5, further comprising:
a regulator (180) of which an input terminal is coupled to the cathode of the charger-side diode (152) and the cathode of the battery-side diode (153); and
a light-emitting diode, LED, display (160) configured to display an amount of charge of the battery cell (110) in response to a control signal of the battery control circuit (140),
wherein the LED display (160) is configured to receive power from an output terminal of the regulator (180).

8. The battery pack (100) of claim 4 or 5, further comprising:
a regulator (180) of which an input terminal is coupled to the cathode of the charger-side diode (152) and the cathode of the battery-side diode (153); and
a discharge switch driving driver (170) configured to drive the discharge switch (130) in response to a control signal of the battery control circuit (140),
wherein the discharge switch driving driver (170) is configured to receive power from an output terminal of the regulator (180).

9. The battery pack (100) of one of the preceding claims, wherein the battery control circuit (140) is configured to directly drive the charge switch (120) by means of a control signal of the battery control circuit (140).

10. A battery pack (200) comprising:
a charge switch (120) coupled between a battery cell positive terminal (111) and a charger positive terminal (113) and between a pack positive terminal (114) and the charger positive terminal (113);
a discharge switch (130) coupled between a battery cell negative terminal (112) and a pack negative terminal (116) and between a charger negative terminal (117) and the pack negative terminal (116);
a battery control circuit (140) configured to control the charge switch (120) and the discharge switch (130);
a light-emitting diode, LED, display configured to display an amount of charge of a battery cell (110) in response to a control signal of the battery control circuit (140); and
a power supply circuit (150) coupled between the charger positive terminal (113) and the LED display (160),
wherein the power supply circuit (150) is configured to directly supply power to the LED display (160) when the battery cell (110) is coupled to a charger.

11. The battery pack (200) of claim 10, further comprising a discharge switch driving driver (170) configured to drive the discharge switch (130) in response to a control signal of the battery control circuit (140),
wherein the power supply circuit (150) is configured to directly supply power to the discharge switch driving driver (170) when the battery cell (110) is coupled to the charger.

12. The battery pack (200) of claim 10 or 11, wherein the power supply circuit (150) includes:
a voltage maintaining diode (151) of which an anode is coupled to the charger positive terminal (113) and a cathode is coupled to the charge switch (120) so that a voltage of the charger is higher than a voltage of the battery cell (110);
a charger-side diode (152) of which an anode is coupled to the charger positive terminal (113) and a cathode is coupled to the LED display (160); and
a battery-side diode (153) of which an anode is coupled to the battery cell positive terminal (111) and a cathode is coupled to the LED display (160).

13. The battery pack (200) of claim 12, wherein an output voltage of the charger-side diode (152) is higher than an output voltage of the battery-side diode (153).

14. The battery pack (200) of claim 12 or 13, further comprising a regulator (180) of which an input terminal is coupled to the cathode of the charger-side diode (152) and the cathode of the battery-side diode (153),
wherein the LED display (160) is configured to receive power from an output terminal of the regulator (180).

15. The battery pack (200) of claim 12 or 13, further comprising:
a regulator (180) of which an input terminal is coupled to the cathode of the charger-side diode (152) and the cathode of the battery-side diode (153); and
a discharge switch driving driver (170) configured to drive the discharge switch (130) in response to a control signal of the battery control circuit (140),
wherein the discharge switch driving driver (170) is configured to receive power from an output terminal of the regulator (180).
